# EUROPEAN PATENT APPLICATION

(11) **EP 4 836 489 A1**
(43) Date of publication of application: **04.11.2026**
(21) Application number: 23962836.5
(22) Date of filing: 29.12.2023
(51) Int. Cl.: H04W 24/02

(54) **UPLINK SENDING METHOD AND APPARATUS, AND UPLINK RECEIVING METHOD AND APPARATUS**

(71) Applicant: 1FINITY INC., Kawasaki-shi, Kanagawa 211-8588 (JP)
(72) Inventor: WANG, Guotong, Beijing 100022 (CN); WANG, Xin, Beijing 100022 (CN); ZHANG, Jian, Beijing 100022 (CN); LU, Yiwen, Beijing 100022 (CN); ZHAO, Di, Beijing 100022 (CN)
(74) Representative: Haseltine Lake Kempner LLP
(86) International application number: PCT/CN2023/143413
(87) International publication number: WO 2025/138162

(57) **Abstract**

Embodiments of this disclosure provide an uplink transmitting method and apparatus, and an uplink receiving method and apparatus. The uplink transmitting method includes: a terminal equipment receives configuration information from a network device, wherein the configuration information is used to configure the terminal equipment for a 3-port uplink transmission; and the terminal equipment performs an uplink transmission using 3 ports according to the configuration information.

## Description

### Technical Field

Embodiments of this disclosure relate to the field of communication technologies.

### Background

In a New Radio (NR) system, a codebook-based uplink transmission, such as a Physical Uplink Shared Channel (PUSCH) transmission, is supported. The PUSCH transmission may use a single port, two ports, four ports, or eight ports.

It should be noted that the above introduction to the background is merely provided for clear and complete explanation of technical solutions of this disclosure and for easy understanding by those skilled in the art. And it should not be understood that these technical solutions are known to those skilled in the art only because they are described in the background of this disclosure.

### Summary

The inventors found that a current codebook-based uplink transmission is not supported by a UE with 3Tx, that is, a PUSCH transmission with 3 ports is not supported. There is currently no explicit solution for a 3-port uplink transmission.

In view of at least one of the above problems, embodiments of this disclosure provide an uplink transmitting method and apparatus and an uplink receiving method and apparatus.

According to one aspect of the embodiments of this disclosure, there is provided an uplink transmitting method, including:
receiving, by a terminal equipment, configuration information from a network device, wherein the configuration information is used to configure the terminal equipment for a 3-port uplink transmission; and
performing, by the terminal equipment, an uplink transmission using 3 ports according to the configuration information.

According to another aspect of the embodiments of this disclosure, there is provided an uplink transmitting apparatus, including:
a receiving unit configured to receive configuration information from a network device, wherein the configuration information is used to configure a terminal equipment for a 3-port uplink transmission; and
a transmitting unit configured to perform an uplink transmission using 3 ports according to the configuration information.

According to another aspect of the embodiments of this disclosure, there is provided an uplink receiving method, including:
transmitting, by a network device, configuration information to a terminal equipment, wherein the configuration information is used to configure the terminal equipment for a 3-port uplink transmission; and
receiving, by the network device, an uplink transmission performed by the terminal equipment using 3 ports according to the configuration information.

According to another aspect of the embodiments of this disclosure, there is provided an uplink receiving apparatus, including:
a transmitting unit configured to transmit configuration information to a terminal equipment, wherein the configuration information is used to configure the terminal equipment for a 3-port uplink transmission; and
a receiving unit configured to receive an uplink transmission performed by the terminal equipment using 3 ports according to the configuration information.

According to another aspect of the embodiments of this disclosure, there is provided a communication system, including:
a network device configured to transmit configuration information to a terminal equipment, wherein the configuration information is used to configure the terminal equipment for a 3-port uplink transmission; and
a terminal equipment configured to perform an uplink transmission using 3 ports according to the configuration information.

One of advantageous effects of the embodiments of this disclosure is that a terminal equipment receives configuration information from a network device, wherein the configuration information is used to configure the terminal equipment for a 3-port uplink transmission, and performs an uplink transmission using 3 ports according to the configuration information, thereby improving the performance and efficiency of the uplink transmission.

With reference to the following description and drawings, the particular embodiments of this disclosure are disclosed in detail, and the manners in which the principle of this disclosure can be used are indicated. It should be understood that the scope of the embodiments of this disclosure is not limited thereto. The embodiments of this disclosure contain a plurality of alternations, amendments and equivalents within the spirit and the scope of the terms of the appended claims.

Features that are described and/or illustrated with respect to one embodiment may be used in a same way or in a similar way in one or more other embodiments, in combination with or instead of the features of the other embodiments.

It should be emphasized that the term "comprise/include" when used herein refers to the presence of features, integers, steps or components, but does not preclude the presence or addition of one or more other features, integers, steps or components.

### Brief Description of the Drawings

Elements and features depicted in one drawing or embodiment of this disclosure may be combined with elements and features depicted in one or more additional drawings or embodiments. Moreover, in the drawings, similar reference numerals designate corresponding parts throughout multiple drawings and may be used to designate like or similar parts in more than one embodiment.
FIG. 1 is a schematic diagram illustrating a communication system according to an embodiment of this disclosure;
FIG. 2 is a schematic diagram illustrating an uplink transmitting method according to an embodiment of this disclosure;
FIG. 3 is a schematic diagram illustrating an uplink receiving method according to an embodiment of this disclosure;
FIG. 4 is a schematic diagram illustrating an uplink transmitting apparatus according to an embodiment of this disclosure;
FIG. 5 is a schematic diagram illustrating an uplink receiving apparatus according to an embodiment of this disclosure;
FIG. 6 is a schematic diagram illustrating a terminal equipment according to an embodiment of this disclosure; and
FIG. 7 is a schematic diagram illustrating a network device according to an embodiment of this disclosure.

### Detailed Description

The above and other features of this disclosure will be apparent with reference to the following description and drawings. In the description and drawings, particular embodiments of this disclosure have been disclosed in detail as being indicative of some of the embodiments in which the principles of this disclosure may be employed, however, it should be understood that this disclosure is not limited to the embodiments described herein. Rather, this disclosure includes all amendments, variants and equivalents falling within the scope of the appended claims.

In embodiments of this disclosure, terms "first", "second", etc. are used to differentiate different elements with respect to names, and do not indicate spatial arrangement or temporal orders of these elements, and these elements should not be limited by these terms. Terms "and/or" includes any one and all combinations of one or more relevantly listed terms. Terms "comprising", "including", "having" refer to presence of stated features, elements, components, or assemblies, but do not exclude presence or addition of one or more other features, elements, components, or assemblies.

In embodiments of this disclosure, singular forms "a", "the", etc., include plural forms, and should be understood as "a kind of" or "a type of" in a broad sense, but should not be limited to a meaning of "one"; and the term "the" should be understood as including both a singular form and a plural form, except clearly specified otherwise. Furthermore, the term "according to" should be understood as "at least partially according to......", the term "based on" should be understood as "at least partially based on......", except clearly specified otherwise.

In embodiments of this disclosure, the term "communication network" or "wireless communication network" may refer to a network satisfying any one of communication standards, such as Long Term Evolution (LTE), Long Term Evolution-Advanced (LTE-A), Wideband Code Division Multiple Access (WCDMA), and High-Speed Packet Access (HSPA), etc.

Furthermore, communication between devices in a communication system may be performed according to communication protocols at any stage, which may, for example, include but not limited to the communication protocols: 1G (generation), 2G, 2.5G, 2.75G, 3G, 4G, 4.5G, and 5G, New Radio (NR) and 6G in the future, etc., and/or other communication protocols that are currently known or will be developed in the future.

In embodiments of this disclosure, the term "network device", for example, refers to a device in a communication system that accesses a terminal equipment to a communication network and provides services for the terminal equipment. The network device may include but not limited to devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), an IAB host, etc. Furthermore, the base station may include a remote radio head (RRH), a remote radio unit (RRU), a relay, or a low-power node (such as a femto, and a pico, etc.). And the term "base station" may include some or all of its functions, and each base station may provide communication coverage for a specific geographic area. And a term "cell" may refer to a base station and/or its coverage area, depending on a context in which the term is used.

In embodiments of this disclosure, the term "user equipment" (UE) or "terminal equipment or terminal device" (TE) refers to, for example, equipment accessing to a communication network and receiving network services via a network device. The terminal equipment may be fixed or mobile, and may also be referred to as a mobile station (MS), a terminal, a subscriber station (SS), an access terminal (AT), a station, etc.

The terminal equipment may include but not limited to devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, the terminal equipment may include but not limited to a machine-type communication (MTC) terminal, a vehicle mounted communication terminal, a device to device (D2D) terminal, and a machine to machine (M2M) terminal, etc.

Moreover, the term "network side" or "network device side" refers to a side of a network, which may be a base station or include one or more network devices described above. The term "user side" or "terminal side" or "terminal equipment side" refers to a side of a user or a terminal, which may be a UE, or may include one or more terminal equipments described above. "A device" in this text may refer to a network device, and may also refer to a terminal equipment, except otherwise specified.

Scenarios of embodiments in this disclosure shall be described below by way of examples. However, this disclosure is not limited thereto.

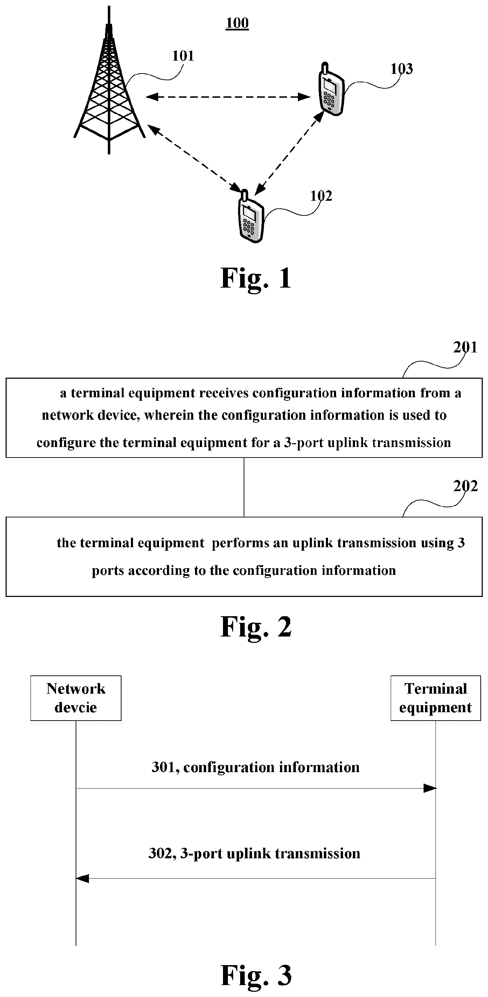

FIG. 1 is a schematic diagram illustrating a communication system according to an embodiment of this disclosure, which schematically illustrates a situation in which a terminal equipment and a network device are used as an example. As illustrated in the FIG. 1, a communication system 100 may include a network device 101 and terminal equipments 102 and 103. For the sake of simplicity, the FIG. 1 only illustrates two terminal equipments and one network device as an example, however, the embodiments of this disclosure are not limited thereto.

In embodiments of this disclosure, existing services or services that may be implemented in the future may be transmitted between the network device 101 and the terminal equipments 102 and 103. For example, these services may include but are not limited to: an enhanced Mobile Broadband (eMBB), a massive Machine Type Communication (mMTC), and an Ultra-Reliable and Low Latency Communication (URLLC), etc.

It should be noted that the FIG. 1 illustrates that both the terminal equipments 102 and 103 fall within coverage of the network device 101, however, this disclosure is not limited thereto. Both the terminal equipments 102 and 103 may not fall within the coverage of the network device 101, or one terminal equipment 102 falls within the coverage of the network device 101 and the other terminal equipment 103 falls out of the coverage of the network device 101.

In embodiments of this disclosure, higher layer signaling may be, for example, radio resource control (RRC) signaling; for example, an RRC message, including, for example, a MIB, system information, a dedicated RRC message; or an RRC IE (RRC information element). The higher layer signaling may also be, for example, MAC (Medium Access Control) signaling; or MAC CE (MAC control element). However, this disclosure is not limited thereto.

In the following description, terms "PUCCH" and "physical uplink control channel" or "uplink control information" may be interchanged, and terms "PUSCH" and "physical uplink data channel" or "uplink data" may also be interchanged without confusion. In addition, transmitting or receiving a PUSCH may be understood as transmitting or receiving uplink data carried by the PUSCH.

### Embodiments of a First Aspect

The embodiments of this disclosure provide an uplink transmitting method described from a terminal equipment side.

FIG. 2 is a schematic diagram illustrating an uplink transmitting method according to an embodiment of this disclosure. As illustrated in the FIG. 2, the method includes:
201: a terminal equipment receives configuration information from a network device, wherein the configuration information is used to configure the terminal equipment for a 3-port uplink transmission; and
202: the terminal equipment performs an uplink transmission using 3 ports according to the configuration information.

It should be noted that the FIG. 2 only schematically illustrates the embodiments of this disclosure, however, this disclosure is not limited thereto. For example, an order of execution of operations may be appropriately adjusted, and some other operations may be added, or some operations therein may be removed. And appropriate variants may be made by those skilled in the art according to the above content, without being limited to the disclosure illustrated in the FIG. 2.

In some embodiments, a sounding reference signal (SRS) resource with 4 ports is re-used; and one port in the SRS resource with 4 ports is not used for the 3-port uplink transmission.

For example, for a 3Tx uplink transmission, an SRS resource with 4 ports is re-used, and one port is not used for the 3-port uplink transmission. The port, which is not used for the 3-port uplink transmission, may be configured and/or indicated by a network device.

In some embodiments, one port not used for a 3-port uplink transmission is configured via RRC signaling, and/or is indicated by a MAC-CE, and/or is indicated by DCI.

For example, a port may be configured not to be used for a 3-port uplink transmission through information in RRC signaling.

For another example, a port may be activated by a MAC-CE so as not to be used for a 3-port uplink transmission; or, 3 ports may be activated by a MAC-CE so as to be used for a 3-port uplink transmission, and a remaining 1 port is not used for the 3-port uplink transmission; or, a port may be deactivated by a MAC-CE, then the port is not used for a 3-port uplink transmission.

For another example, DCI may be used to indicate that a port is not used for a 3-port uplink transmission.

In some embodiments, the 3-port uplink transmission is scheduled by DCI, and a port, which is not used for the 3-port uplink transmission, is indicated by a field added into the DCI.

For example, if DCI is used to indicate which SRS port is not used for a 3-port uplink transmission, a new DCI field may be added into a DCI format, and the field may schedule a 3-port PUSCH transmission. The DCI format is, for example, a DCI format 0_1/0_2/0_3.

In some embodiments, a 3-port SRS transmission is performed by bundling a 2-port SRS resource with a single-port SRS resource.

For example, for a 3Tx uplink transmission, a 3-port SRS operation may be performed by bundling a 2-port SRS resource and a single-port SRS resource. The 2-port SRS resource and the single-port SRS resource may be time-division multiplexed (TDM); for example, on different OFDM symbols where the OFDM symbols may be adjacent to one another. Alternatively, the 2-port SRS resource and the single-port SRS resource may be frequency-division multiplexed (FDM); for example, on different REs with different comb offsets. Alternatively, the 2-port SRS resource and the single-port SRS resource may occupy the same REs; for example, the 2-port SRS resource and the single-port SRS resource are distinguished by different cyclic shifts.

In some embodiments, a 3-port SRS transmission is performed by bundling three single-port SRS resources.

For example, for a 3Tx uplink transmission, a 3-port SRS operation may be performed by bundling three single-port SRS resources. The three single-port SRS resources may be time-division multiplexed (TDM); for example, on different OFDM symbols where the OFDM symbols may be adjacent to each other. Alternatively, the 3 single-port SRS resources may be frequency-division multiplexed (FDM); for example, on different REs with different comb offsets. Alternatively, the three single-port SRS resources may occupy the same REs; for example, the three single-port SRS resources are distinguished by different cyclic shifts.

In some embodiments, a 3-port SRS transmission is performed by time-division multiplexing (TDM) and/or frequency-division multiplexing (FDM) SRS resources. For example, for a 3Tx uplink transmission, a 3-port SRS operation may be performed by one SRS resource in a TDM or FDM mode.

For example, in a TDM mode, two OFDM symbols (which may be adjacent to each other) may be used to perform a 3-port SRS operation, i.e., one OFDM symbol is mapped to two ports, and the other OFDM symbol is mapped to one port. Alternatively, three OFDM symbols (which may be adjacent to one another) may be used to perform a 3-port SRS operation, i.e., each OFDM symbol is mapped to one port.

For another example, in an FDM mode, two comb offsets may be used to perform a 3-port SRS operation, that is, one comb offset is mapped to two ports, and the other comb offset is mapped to one port. Alternatively, three comb offsets may be used to perform a 3-port SRS operation, that is, each comb offset is mapped to one port.

In some embodiments, a 3-port non-coherent precoding matrix is pre-defined for a non-coherent PUSCH transmission with 3 ports.

For example, Table 1 shows an example of a rank-1 precoding matrix with 3 ports.

**Table 1 Precoding matrix W for single layer transmission using 3 antenna ports (for both CP-OFDM and DFT-s-OFDM)**

| TPMI Index | W (ordered from left to right in increasing order of TPMI index) | | |
|---|---|---|---|
| 0-2 | $\frac{1}{\sqrt{3}} \left[\begin{matrix}1 \\ 0 \\ 0\end{matrix}\right]$ | $\frac{1}{\sqrt{3}} \left[\begin{matrix}0 \\ 1 \\ 0\end{matrix}\right]$ | $\frac{1}{\sqrt{3}} \left[\begin{matrix}0 \\ 0 \\ 1\end{matrix}\right]$ |

For another example, Table 2 shows an example of a rank-2 precoding matrix with 3 ports.

**Table 2 Precoding matrix W for two-layer transmission using 3 antenna ports (for CP-OFDM)**

| TPMI Index | W (ordered from left to right in increasing order of TPMI index) | | |
|---|---|---|---|
| 0-2 | $\frac{1}{\sqrt{3}} \left[\begin{matrix}1 & 0 \\ 0 & 1 \\ 0 & 0\end{matrix}\right]$ | $\frac{1}{\sqrt{3}} \left[\begin{matrix}1 & 0 \\ 0 & 0 \\ 0 & 1\end{matrix}\right]$ | $\frac{1}{\sqrt{3}} \left[\begin{matrix}0 & 0 \\ 1 & 0 \\ 0 & 1\end{matrix}\right]$ |

For another example, Table 3 shows another example of a rank-3 precoding matrix with 2 ports.

**Table 3 Precoding matrix W for two-layer transmission using 3 antenna ports (for CP-OFDM)**

| TPMI Index | W (ordered from left to right in increasing order of TPMI index) | | |
|---|---|---|---|
| 0-2 | $\frac{1}{\sqrt{3}} \left[\begin{matrix}1 & 0 \\ 0 & 1 \\ 0 & 0\end{matrix}\right]$ | $\frac{1}{\sqrt{3}} \left[\begin{matrix}1 & 0 \\ 0 & 0 \\ 0 & 1\end{matrix}\right]$ | $\frac{1}{\sqrt{3}} \left[\begin{matrix}0 & 0 \\ 1 & 0 \\ 0 & 1\end{matrix}\right]$ |
| 3-5 | $\frac{1}{\sqrt{3}} \left[\begin{matrix}0 & 1 \\ 1 & 0 \\ 0 & 0\end{matrix}\right]$ | $\frac{1}{\sqrt{3}} \left[\begin{matrix}0 & 1 \\ 0 & 0 \\ 1 & 0\end{matrix}\right]$ | $\frac{1}{\sqrt{3}} \left[\begin{matrix}0 & 0 \\ 0 & 1 \\ 1 & 0\end{matrix}\right]$ |

For another example, Table 4 shows an example of a rank-3 precoding matrix with 3 ports.

**Table 4 Precoding matrix W for three-layer transmission using 3 antenna ports (for CP-OFDM)**

| TPMI Index | W (ordered from left to right in increasing order of TPMI index) |
|---|---|
| 0 | $\frac{1}{\sqrt{3}} \left[\begin{matrix}1 & 0 & 0 \\ 0 & 1 & 0 \\ 0 & 0 & 1\end{matrix}\right]$ |

In some embodiments, for a non-coherent PUSCH transmission with 3 ports, a 4-port non-coherent precoding matrix is re-used for the 3-port uplink transmission; and one port in the 4-port non-coherent precoding matrix is not used for the 3-port uplink transmission.

In some embodiments, one port in the 4-port non-coherent precoding matrix, which is not used for the 3-port uplink transmission, is the same as one port in an SRS resource with 4 ports, which is not used for the 3-port uplink transmission.

For example, antenna ports not used for a 3-port PUSCH transmission are the same as antenna ports not used for an SRS configured/indicated by RRC or a MAC-CE or DCI. For example, for a Transmitted Precoding Matrix Indicator (TPMI), only some precoders may be indicated, where rows corresponding to unused antenna ports are all zero.

For another example, a scaling factor applied to these precoding matrices may be pre-defined or configured or indicated. For example, the scaling factor is $s = \frac{2}{\sqrt{3}}$. If the indicated precoding matrix is A, a final precoder is determined to be *W* = *s* × *A*.

In some embodiments, a field length and/or TPMI indication mapping information (table) for the 3-port uplink transmission is pre-defined in DCI scheduling the 3-port uplink transmission.

For example, field (precoding information and number of layers) length and table for TPMI indication may be defined for a 3-port non-coherent precoder in DCI scheduling a 3-port PUSCH transmission.

For example, Table 5 shows an example of a TPMI field length depending on a maxRank value considering the 3-port non-coherent precoder as shown in Tables 1, 2 and 4.

**Table 5 TPMI field length depending on maxRank value**

| maxRank value | Number of precoders | Field length of Precoding information and number of layers |
|---|---|---|
| 1 | 3 | 2 bits |
| 2 | 3+3=6 | 3 bits |
| 3 | 3+3+1=7 | 3 bits |

For another example, Table 6 shows an example of a TPMI indication table for the precoding information and number of layers field with maxRank = 1.

**Table 6 TPMI indication table for 3-port PUSCH transmission with maxRank = 1**

| Bit field mapped to index | codebookSubset = nonCoherent |
|---|---|
| 0 | 1 layer: TPMI=0 |
| 1 | 1 layer: TPMI=1 |
| 2 | 1 layer: TPMI=2 |
| 3 | Reserved |

For another example, Table 7 shows an example of a TPMI indication table for the precoding information and number of layers field with maxRank = 2.

**Table 7 TPMI indication table for 3-port PUSCH transmission with maxRank = 2**

| Bit field mapped to index | codebookSubset = nonCoherent |
|---|---|
| 0 | 1 layer: TPMI=0 |
| 1 | 1 layer: TPMI=1 |
| 2 | 1 layer: TPMI=2 |
| 3 | 2 layers: TPMI=0 |
| 4 | 2 layers: TPMI=1 |
| 5 | 2 layers: TPMI=2 |
| 6~7 | Reserved |

For another example, Table 8 shows an example of a TPMI indication table for the precoding information and number of layers field with maxRank = 3.

**Table 8 TPMI indication table for 3-port PUSCH transmission with maxRank = 3**

| Bit field mapped to index | codebookSubset = nonCoherent |
|---|---|
| 0 | 1 layer: TPMI=0 |
| 1 | 1 layer: TPMI=1 |
| 2 | 1 layer: TPMI=2 |
| 3 | 2 layers: TPMI=0 |
| 4 | 2 layers: TPMI=1 |
| 5 | 2 layers: TPMI=2 |
| 6 | 3 layers: TPMI=0 |
| 7 | Reserved |

In some embodiments, DCI scheduling the 3-port uplink transmission for a multi-TRP or multi-panel transmission includes two precoding information and number of layers fields. Rank information indicated by the two precoding information and number of layers fields are the same.

For example, for a multi-TRP operation and/or a multi-panel transmission operation, DCI may include two precoding information and number of layers fields. Values of ranks indicated by the two fields may be the same, that is, a rank indicated by a second precoding information and number of layers field is the same as a rank indicated by a first precoding information and number of layers field.

In some embodiments, TPMI indication mapping information of a first precoding information and number of layers field in the two precoding information and number of layers fields is pre-defined for the 3-port uplink transmission.

For example, for a 3-port PUSCH transmission, a TPMI indication table for a first precoding information and number of layers field may be the same as that shown in Tables 6, 7 or 8.

In some embodiments, a field length of a second precoding information and number of layers field in the two precoding information and number of layers fields is pre-defined for the 3-port uplink transmission.

For example, since rank information may be obtained from the first precoding information and number of layers field, a length of the second precoding information and number of layers field may be as shown in Table 9.

**Table 9 Length of the second Precoding information and number of layers field, depending on maxRank value**

| maxRank value | Number of precoders | Field length of the second Precoding information and number of layers field |
|---|---|---|
| 1 | Rank 1: 3 | 2 bits |
| 2 | Rank 1: 3 | 2 bits |
| | Rank 2: 3 | |
| 3 | Rank 1: 3 | 2 bits |
| | Rank 2: 3 | |
| | Rank 3: 1 | |

In some embodiments, TPMI indication mapping information of a second precoding information and number of layers field in the two precoding information and number of layers fields is pre-defined for the 3-port uplink transmission.

For example, Table 10 shows an example of a TPMI indication table for the second precoding information and number of layers field with maxRank = 1.

**Table 10 TPMI indication table for the second Precoding information and number of layers field with maxRank = 1**

| Bit field mapped to index | codebookSubset= nonCoherent |
|---|---|
| 0 | 1 layer: TPMI=0 |
| 1 | 1 layer: TPMI=1 |
| 2 | 1 layer: TPMI=2 |
| 3 | Reserved |

For another example, Table 11 shows an example of a TPMI indication table for the second precoding information and number of layers field with maxRank = 2.

**Table 11 TPMI indication table for the second Precoding information and number of layers field with maxRank = 2**

| Bit field mapped to index | codebookSubset = nonCoherent |
|---|---|
| 0 | 1 layer: TPMI=0 |
| 1 | 1 layer: TPMI=1 |
| 2 | 1 layer: TPMI=2 |
| 3 | 1 layer: reserved |
| 0 | 2 layers: TPMI=0 |
| 1 | 2 layers: TPMI=1 |
| 2 | 2 layers: TPMI=2 |
| 3 | 2 layers: reserved |

For another example, Table 12 shows an example of a TPMI indication table for the second precoding information and number of layers field with maxRank = 3.

**Table 12 TPMI indication table for the second Precoding information and number of layers field with maxRank = 3**

| Bit field mapped to index | codebookSubset = nonCoherent |
|---|---|
| 0 | 1 layer: TPMI=0 |
| 1 | 1 layer: TPMI=1 |
| 2 | 1 layer: TPMI=2 |
| 3 | 1 layer: reserved |
| 0 | 2 layers: TPMI=0 |
| 1 | 2 layers: TPMI=1 |
| 2 | 2 layers: TPMI=2 |
| 3 | 2 layers: reserved |
| 0 | 3 layers: TPMI=0 |
| 1~3 | 3 layers: reserved |

The above embodiments only illustrate the disclosure. However, this disclosure is not limited thereto, and appropriate variants may be made on the basis of the above embodiments. For example, the above embodiments may be used alone, or one or more of the above embodiments may be combined together.

As can be seen from the above embodiments, a terminal equipment receives configuration information from a network device, wherein the configuration information is used to configure the terminal equipment for a 3-port uplink transmission, and performs an uplink transmission using 3 ports according to the configuration information, thereby improving the performance and efficiency of the uplink transmission.

### Embodiments of a Second Aspect

The embodiments of this disclosure provide an uplink receiving method described from a network device side. The embodiments of the second aspect may be combined with the embodiments of the first aspect. Same contents as those of the embodiments of the first aspect will not be described again.

FIG. 3 is another schematic diagram illustrating an uplink receiving method according to an embodiment of this disclosure. As illustrated in the FIG. 3, the method includes:
301: a network device transmits configuration information to a terminal equipment, wherein the configuration information is used to configure the terminal equipment for a 3-port uplink transmission; and
302: the network device receives an uplink transmission performed by the terminal equipment using 3 ports according to the configuration information.

The above embodiments only illustrate the disclosure. However, this disclosure is not limited thereto, and appropriate variants may be made on the basis of the above embodiments. For example, the above embodiments may be used alone, or one or more of the above embodiments may be combined together.

As can be seen from the above embodiments, a terminal equipment receives configuration information from a network device, wherein the configuration information is used to configure the terminal equipment for a 3-port uplink transmission, and performs an uplink transmission using 3 ports according to the configuration information, thereby improving the performance and efficiency of the uplink transmission.

### Embodiments of a Third Aspect

The embodiments of this disclosure provide an uplink transmitting apparatus, which may be, for example, a terminal equipment, or may be one or more components or assemblies configured in the terminal equipment. Same contents as those of the embodiments of the first and second aspects will not be described again.

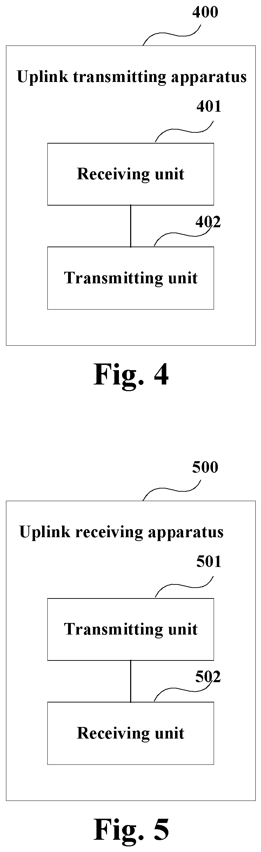

FIG. 4 is a schematic diagram illustrating an uplink transmitting apparatus according to an embodiment of this disclosure. As illustrated in the FIG. 4, an uplink transmitting apparatus 400 according to an embodiment of this disclosure includes:
a receiving unit 401 configured to receive configuration information from a network device, wherein the configuration information is used to configure a terminal equipment for a 3-port uplink transmission; and
a transmitting unit 402 configured to perform an uplink transmission using ports according to the configuration information.

In some embodiments, an SRS resource with 4 ports is re-used; and one port in the SRS resource with 4 ports is not used for the 3-port uplink transmission.

In some embodiments, one port not used for the 3-port uplink transmission is configured via RRC signaling, and/or is indicated by a MAC-CE, and/or is indicated by DCI.

In some embodiments, the 3-port uplink transmission is scheduled by DCI, and a port, which is not used for the 3-port uplink transmission, is indicated by a field added into the DCI.

In some embodiments, a 3-port SRS transmission is performed by bundling a 2-port SRS resource with a single-port SRS resource.

In some embodiments, a 3-port SRS transmission is performed by bundling three single-port SRS resources.

In some embodiments, a 3-port SRS transmission is performed by time-division multiplexing (TDM) and/or frequency-division multiplexing (FDM) SRS resources.

In some embodiments, a 3-port non-coherent precoding matrix is pre-defined for a non-coherent PUSCH transmission with 3 ports.

In some embodiments, for a non-coherent PUSCH transmission with 3 ports, a 4-port non-coherent precoding matrix is re-used for the 3-port uplink transmission; and one port in the 4-port non-coherent precoding matrix is not used for the 3-port uplink transmission.

In some embodiments, one port in the 4-port non-coherent precoding matrix, which is not used for the 3-port uplink transmission, is the same as one port in an SRS resource with 4 ports, which is not used for the 3-port uplink transmission.

In some embodiments, a field length and/or TPMI indication mapping information (table) for the 3-port uplink transmission is pre-defined in DCI scheduling the 3-port uplink transmission.

In some embodiments, DCI scheduling the 3-port uplink transmission for a multi-TRP or multi-panel transmission includes two precoding information and number of layers fields.

In some embodiments, rank information indicated by the two precoding information and number of layers fields are the same.

In some embodiments, TPMI indication mapping information of a first precoding information and number of layers field in the two precoding information and number of layers fields is pre-defined for the 3-port uplink transmission.

In some embodiments, a field length of a second precoding information and number of layers field in the two precoding information and number of layers fields is pre-defined for the 3-port uplink transmission.

In some embodiments, TPMI indication mapping information of a second precoding information and number of layers field in the two precoding information and number of layers fields is pre-defined for the 3-port uplink transmission.

The above embodiments only illustrate the disclosure. However, this disclosure is not limited thereto, and appropriate variants may be made on the basis of the above embodiments. For example, the above embodiments may be used alone, or one or more of the above embodiments may be combined together.

It should be noted that the components or modules related to this disclosure are only described above, however, this disclosure is not limited thereto. The uplink transmitting apparatus 400 may also include other components or modules. Refer to the related arts for the specific content of these components or modules.

In addition, for the sake of simplicity, the FIG. 4 only exemplifies a connection relationship or a signal direction of components or modules, however, those skilled in the art should appreciate that the related arts such as bus connections may be adopted. The components or modules may be implemented by hardware facilities, such as a processor, a memory, a transmitter, and a receiver, which is not limited in this disclosure.

As can be seen from the above embodiments, a terminal equipment receives configuration information from a network device, wherein the configuration information is used to configure the terminal equipment for a 3-port uplink transmission, and performs an uplink transmission using 3 ports according to the configuration information, thereby improving the performance and efficiency of the uplink transmission.

### Embodiments of a Fourth Aspect

The embodiments of this disclosure provide an uplink receiving apparatus, which may be, for example, a network device, or may be one or more components or assemblies configured in the network device. Same contents as those of the embodiments of the first to third aspects will not be described again.

FIG. 5 is another schematic diagram illustrating an uplink receiving apparatus according to an embodiment of this disclosure. As illustrated in the FIG. 5, an uplink receiving apparatus 500 includes:
a transmitting unit 501 configured to transmit configuration information to a terminal equipment, wherein the configuration information is used to configure the terminal equipment for a 3-port uplink transmission; and
a receiving unit 502 configured to receive an uplink transmission performed by the terminal equipment using 3 ports according to the configuration information.

The above embodiments only illustrate the disclosure. However, this disclosure is not limited thereto, and appropriate variants may be made on the basis of the above embodiments. For example, the above embodiments may be used alone, or one or more of the above embodiments may be combined together.

It should be noted that the components or modules related to this disclosure are only described above, however, this disclosure is not limited thereto. The uplink receiving apparatus 500 may also include other components or modules. Refer to the related arts for the specific content of these components or modules.

In addition, for the sake of simplicity, the FIG. 5 only exemplifies a connection relationship or a signal direction of components or modules, however, those skilled in the art should appreciate that the related arts such as bus connections may be adopted. The components or modules may be implemented by hardware facilities, such as a processor, a memory, a transmitter, and a receiver, which is not limited in this disclosure.

As can be seen from the above embodiments, a terminal equipment receives configuration information from a network device, wherein the configuration information is used to configure the terminal equipment for a 3-port uplink transmission, and performs an uplink transmission using 3 ports according to the configuration information, thereby improving the performance and efficiency of the uplink transmission.

### Embodiments of a Fifth Aspect

The embodiments of this disclosure also provide a communication system. Reference may be made to the FIG. 1. Same contents as those of the embodiments of the first to fourth aspects will not be described again.

In some embodiments, a communication system 100 may at least include:
a network device configured to transmit configuration information to a terminal equipment, wherein the configuration information is used to configure the terminal equipment for a 3-port uplink transmission; and
the terminal equipment configured to perform an uplink transmission using 3 ports according to the configuration information.

The embodiments of this disclosure also provide a terminal equipment; however, this disclosure is not limited thereto, and other devices may also be involved.

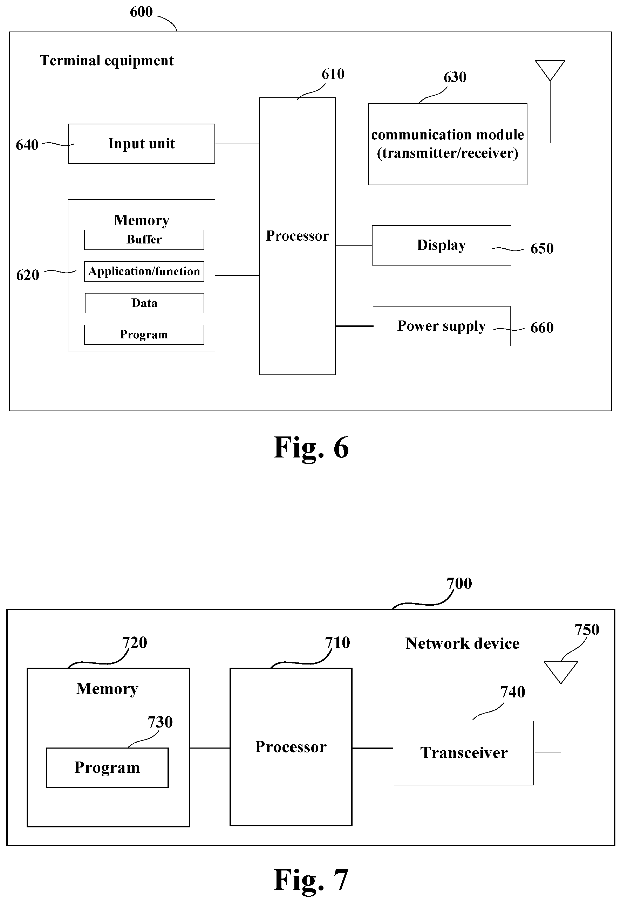

FIG. 6 is a schematic diagram illustrating a terminal equipment according to an embodiment of this disclosure. As illustrated in the FIG. 6, a terminal equipment 600 may include a processor 610 and a memory 620 that stores data and a program and is coupled to the processor 610. It should be noted that the figure is exemplary; and other types of structures may also be used to supplement or replace this structure, in order to implement telecommunication functions or other functions.

For example, the processor 610 may be configured to execute a program to implement the uplink transmitting method according to the embodiments of the first aspect. For example, the processor 610 may be configured to receive configuration information from a network device, wherein the configuration information is used to configure a terminal equipment for a 3-port uplink transmission; and performs an uplink transmission using 3 ports according to the configuration information.

As illustrated in the FIG. 6, the terminal equipment 600 may further include: a communication module 630, an input unit 640, a display 650, and a power supply 660, wherein the functions of the above components are similar to those in the relevant art and will not be described herein again. It should be noted that the terminal equipment 600 does not necessarily include all the components illustrated in the FIG. 6, and the above components are not necessarily required. In addition, the terminal equipment 600 may also include components not illustrated in the FIG. 6. Please refer to the relevant art.

The embodiments of this disclosure further provide a network device, which may be, for example, a base station, however, this disclosure is not limited thereto, and other network devices may also be involved.

FIG. 7 is a schematic diagram illustrating a composition of a network device according to an embodiment of this disclosure. As illustrated in the FIG. 7, a network device 700 may include: a processor 710 (such as a central processing unit (CPU)) and a memory 720 coupled to the processor 710. The memory 720 may store various data. In addition, the memory 720 may store a program 730 for information processing, and the program 730 may be executed under the control of the processor 710.

For example, the processor 710 may be configured to execute a program to implement the uplink receiving method according to the embodiments of the second aspect. For example, the processor 710 may be configured to transmit configuration information to a terminal equipment, wherein the configuration information is used to configure the terminal equipment for a 3-port uplink transmission; and receive an uplink transmission performed by the terminal equipment using 3 ports according to the configuration information.

In addition, as illustrated in the FIG. 7, the network device 700 may further include: a transceiver 740 and an antenna 750, wherein the functions of the above components are similar to those in the relevant art and will not be described herein again. It should be noted that the network device 700 does not necessarily include all the components illustrated in the FIG. 7. In addition, the network device 700 may also include components not illustrated in the FIG. 7. Please refer to the relevant art.

The embodiments of this disclosure also provide a computer program, wherein when the program is executed in a terminal equipment, the program enables the terminal equipment to perform the uplink transmitting method according to the embodiments of the first aspect.

The embodiments of this disclosure also provide a storage medium storing a computer program, wherein the computer program enables a terminal equipment to perform the uplink transmitting method according to the embodiments of the first aspect.

The embodiments of this disclosure also provide a computer program, wherein when the program is executed in a network device, the program enables the network device to perform the uplink receiving method according to the embodiments of the second aspect.

The embodiments of this disclosure also provide a storage medium storing a computer program, wherein the computer program enables a network device to perform the uplink receiving method according to the embodiments of the second aspect.

The above apparatus and method of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a magnetic disk, a CD, a DVD, a flash memory, etc.

The method/apparatus described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. These software modules may respectively correspond to the steps shown in the drawings. And these hardware modules, for example, may be carried out by firming these software modules by using a field programmable gate array (FPGA).

The software modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information to the memory medium; or the memory medium may be a component of the processor. The processor and the memory medium may be located in an ASIC. The software modules may be stored in a memory of a mobile terminal and may also be stored in a memory card of a pluggable mobile terminal. For example, if equipment (such as a mobile terminal) employs an MEGA-SIM card of a relatively large capacity or a flash memory device of a large capacity, the software modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this disclosure. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and amendments to this disclosure may be made by those skilled in the art according to the spirit and principle of this disclosure, and such variants and amendments also fall within the scope of this disclosure.

As to implementations containing the above embodiments, supplements are further disclosed below:
1. An uplink transmitting method, including:
   receiving, by a terminal equipment, configuration information from a network device, wherein the configuration information is used to configure the terminal equipment for a 3-port uplink transmission; and
   performing, by the terminal equipment, an uplink transmission using 3 ports according to the configuration information.
2. An uplink receiving method, including:
   transmitting, by a network device, configuration information to a terminal equipment, wherein the configuration information is used to configure the terminal equipment for a 3-port uplink transmission; and
   receiving, by the network device, an uplink transmission performed by the terminal equipment using 3 ports according to the configuration information.
3. A terminal equipment, including: a memory configured to store a computer program and a processor configured to execute the computer program to implement the uplink transmitting method according to supplement 1.
4. A network device, including: a memory configured to store a computer program and a processor configured to execute the computer program to implement the uplink receiving method according to supplement 2.

## Claims

1. An uplink transmitting apparatus, comprising:
a receiving unit configured to receive configuration information from a network device, wherein the configuration information is used to configure a terminal equipment for a 3-port uplink transmission; and
a transmitting unit configured to perform an uplink transmission using 3 ports according to the configuration information.

2. The apparatus according to claim 1, wherein an SRS resource with 4 ports is re-used; and one port in the SRS resource with 4 ports is not used for the 3-port uplink transmission.

3. The apparatus according to claim 2, wherein one port not used for the 3-port uplink transmission is configured via RRC signaling, and/or is indicated by a MAC-CE, and/or is indicated by DCI.

4. The apparatus according to claim 2, wherein the 3-port uplink transmission is scheduled by DCI, and a port, which is not used for the 3-port uplink transmission, is indicated by a field added into the DCI.

5. The apparatus according to claim 1, wherein a 3-port SRS transmission is performed by bundling a 2-port SRS resource with a single-port SRS resource; or
a 3-port SRS transmission is performed by bundling three single-port SRS resources; or
a 3-port SRS transmission is performed by time-division multiplexing and/or frequency-division multiplexing SRS resources.

6. The apparatus according to claim 1, wherein a 3-port non-coherent precoding matrix is pre-defined for a non-coherent PUSCH transmission with 3 ports.

7. The apparatus according to claim 1, wherein for a non-coherent PUSCH transmission with 3 ports, a 4-port non-coherent precoding matrix is re-used for the 3-port uplink transmission; and one port in the 4-port non-coherent precoding matrix is not used for the 3-port uplink transmission;
one port in the 4-port non-coherent precoding matrix, which is not used for the 3-port uplink transmission, is the same as one port in an SRS resource with 4 ports, which is not used for the 3-port uplink transmission.

8. The apparatus according to claim 1, wherein a field length and/or TPMI indication mapping information for the 3-port uplink transmission is pre-defined in DCI scheduling the 3-port uplink transmission.

9. The apparatus according to claim 1, wherein for a multi-TRP or multi-panel transmission, DCI scheduling the 3-port uplink transmission comprises two precoding information and number of layers fields.

10. The apparatus according to claim 9, wherein rank information indicated by the two precoding information and number of layers fields are the same;
for the 3-port uplink transmission, TPMI indication mapping information of a first precoding information and number of layers field in the two precoding information and number of layers fields is pre-defined; and/or
for the 3-port uplink transmission, a field length of a second precoding information and number of layers field in the two precoding information and number of layers fields is pre-defined; and/or
for the 3-port uplink transmission, TPMI indication mapping information of a second precoding information and number of layers field in the two precoding information and number of layers fields is pre-defined.

11. An uplink receiving apparatus, comprising:
a transmitting unit configured to transmit configuration information to a terminal equipment, wherein the configuration information is used to configure the terminal equipment for a 3-port uplink transmission; and
a receiving unit configured to receive an uplink transmission performed by the terminal equipment using 3 ports according to the configuration information.

12. The apparatus according to claim 11, wherein an SRS resource with 4 ports is re-used; and one port in the SRS resource with 4 ports is not used for the 3-port uplink transmission, and wherein one port not used for the 3-port uplink transmission is configured via RRC signaling, and/or is indicated by a MAC-CE, and/or is indicated by DCI.

13. The apparatus according to claim 12, wherein the 3-port uplink transmission is scheduled by DCI, and a port, which is not used for the 3-port uplink transmission, is indicated by a field added into the DCI.

14. The apparatus according to claim 11, wherein a 3-port SRS transmission is performed by bundling a 2-port SRS resource with a single-port SRS resource; or
a 3-port SRS transmission is performed by bundling three single-port SRS resources; or
a 3-port SRS transmission is performed by time-division multiplexing and/or frequency-division multiplexing SRS resources.

15. The apparatus according to claim 11, wherein a 3-port non-coherent precoding matrix is pre-defined for a non-coherent PUSCH transmission with 3 ports.

16. The apparatus according to claim 11, wherein for a non-coherent PUSCH transmission with 3 ports, a 4-port non-coherent precoding matrix is re-used for the 3-port uplink transmission; and one port in the 4-port non-coherent precoding matrix is not used for the 3-port uplink transmission;
one port in the 4-port non-coherent precoding matrix, which is not used for the 3-port uplink transmission, is the same as one port in an SRS resource with 4 ports, which is not used for the 3-port uplink transmission.

17. The apparatus according to claim 11, wherein a field length and/or TPMI indication mapping information (table) for the 3-port uplink transmission is/are pre-defined in DCI scheduling the 3-port uplink transmission.

18. The apparatus according to claim 11, wherein for a multi-TRP or multi-panel transmission, DCI scheduling the 3-port uplink transmission comprises two precoding information and number of layers fields.

19. The apparatus according to claim 18, wherein rank information indicated by the two precoding information and number of layers fields are the same;
for the 3-port uplink transmission, TPMI indication mapping information of a first precoding information and number of layers field in the two precoding information and number of layers fields is pre-defined; and/or
for the 3-port uplink transmission, a field length of a second precoding information and number of layers field in the two precoding information and number of layers fields is pre-defined; and/or
for the 3-port uplink transmission, TPMI indication mapping information of a second precoding information and number of layers field in the two precoding information and number of layers fields is pre-defined.

20. A communication system, comprising:
a network device configured to transmit configuration information to a terminal equipment, wherein the configuration information is used to configure the terminal equipment for a 3-port uplink transmission; and
the terminal equipment configured to perform an uplink transmission using 3 ports according to the configuration information.
